Europäisches Patentamt

European Patent Office

Office européen des brevets

(19)

(11) EP 0 639 704 B1

# (12) FASCICULE DE BREVET EUROPEEN

(45) Date de publication et mention
de la délivrance du brevet:
**05.11.1997 Bulletin 1997/45**

(51) Int Cl.6: **F02D 41/18**

(21) Numéro de dépôt: **94401872.0**

(22) Date de dépôt: **18.08.1994**

(54) **Procédé de calcul de la masse d'air admise dans un moteur à combustion interne**

Verfahren zur Berechnung der einer Brennkraftmaschine zugeführten Luftmasse

Method for calculating the mass of air admitted to an internal combustion engine

(84) Etats contractants désignés:
**BE DE ES GB IT**

(30) Priorité: **20.08.1993 FR 9310137**

(43) Date de publication de la demande:
**22.02.1995 Bulletin 1995/08**

(73) Titulaire: **REGIE NATIONALE DES USINES
RENAULT S.A.
92109 Boulogne Billancourt (FR)**

(72) Inventeurs:
• **Taupin, Jean-Marie
F-92140 Clamart (FR)**
• **Prampolini, Francis
F-91120 Palaiseau (FR)**

(56) Documents cités:
**EP-A- 0 230 638**     **EP-A- 0 261 473**
**WO-A-90/07053**     **DE-A- 3 902 168**
**FR-A- 2 524 554**     **US-A- 5 003 950**

## Description

La présente invention concerne un procédé de calcul de la masse d'air admise dans les cylindres d'un moteur à combustion interne équipant notamment un véhicule automobile.

Il est connu de piloter l'injection de carburant d'un moteur à combustion interne grâce à un système électronique de contrôle qui calcule et commande le débit des différents injecteurs de carburant à partir des valeurs prises par un certain nombre de paramètres de fonctionnement du moteur.

Parmi les informations nécessaires à la commande des injecteurs, figure la quantité d'air frais admise dans les cylindres du moteur. Cette quantité d'air détermine directement la quantité de carburant à injecter, le rapport entre les quantités d'air et de carburant étant, en effet, prédéfini pour un moteur donné (ce rapport est d'ailleurs en général égal à 1).

Il en résulte que, la connaissance de la quantité d'air admise permet de déduire la quantité de carburant et donc la durée d'injection de ce dernier dans le cas d'un moteur équipé d'un système d'injection à pression de carburant constante.

La quantité d'air frais admise dans les cylindres d'un moteur est toutefois difficile à mesurer directement, on utilise alors classiquement les valeurs de paramètres plus accessibles qui permettent de recalculer à partir des lois de la mécanique des fluides et de la thermodynamique, la valeur plus ou moins précise de cette quantité d'air.

Plusieurs procédés ont ainsi été développés, on peut citer : la mesure de la pression dans le collecteur d'admission de l'air frais aux différents cylindres combinée à la mesure de la vitesse de rotation du moteur, la mesure du débit d'air dans le collecteur d'admission ou encore la mesure de l'angle d'ouverture du papillon des gaz combinée avec la mesure de la vitesse moteur.

La précision de ces différents procédés et notamment du procédé combinant la mesure de la pression dans le collecteur d'admission à la mesure de la vitesse de rotation du moteur, est tout à fait acceptable en régime stabilisé de fonctionnement du moteur, mais elle l'est moins lors des régimes transitoires (accélérations, décélérations).

En effet, pour calculer le plus précisément possible la quantité d'air admise dans un cylindre donné du moteur, il est nécessaire de connaître les valeurs des paramètres considérés, pression collecteur, débit ou encore angle papillon, à l'instant de la fermeture de la ou des soupapes d'admission correspondantes. Or l'injection du carburant a traditionnellement lieu avant même l'ouverture de la soupape d'admission de façon à permettre une bonne vaporisation du carburant et éviter les phénomènes de mouillage sur les parois du cylindre.

Il en résulte que le système électronique de contrôle moteur ne peut disposer pour la détermination du temps d'injection de chaque injecteur que des valeurs des paramètres de calcul (pression, débit ou angle papillon) mesurées antérieurement à la fermeture des soupapes d'admission correspondantes.

Un tel décalage n'a pas d'incidence en régime stabilisé où les valeurs des paramètres considérés n'évoluent pas ou peu dans le temps. Par contre, lors des fonctionnements du moteur en régimes transitoires, un tel décalage entraîne la prise en compte par le système électronique de contrôle moteur de valeurs très différentes de celles correspondantes à la fermeture des soupapes, d'où l'injection d'une quantité de carburant inadaptée à la quantité d'air réellement admise, provoquant ainsi une importante émission de polluants.

Différents systèmes ont été proposés pour remédier à ces inconvénients, on peut notamment citer les documents US-A-5.003.950 ou US-A-4.424.568 qui décrivent un procédé de prédiction de la quantité admise dans un moteur à combustion interne.

Dans le document US-A-4.424.568, la valeur de la pression d'aspiration qui est mesurée y est corrigée pendant les processus de transition dynamiques, comme une accélération ou une décélération, d'un facteur calculé par le système électronique de contrôle moteur. Ce facteur tient compte du fait que, pendant la durée nécessaire pour le calcul de la quantité de carburant devant être injectée, la pression d'aspiration s'est modifiée par rapport à la pression mesurée. Les quantités de carburant ainsi déterminées pour le fonctionnement en transitoire du moteur à combustion interne, permettent d'obtenir un comportement transitoire amélioré.

Toutefois, les différents procédés connus de prédiction de la masse d'air admise dans les cylindres lors des régimes transitoires de fonctionnement du moteur ont pour inconvénients d'être relativement compliqués à mettre en oeuvre et de nécessiter un système électronique de contrôle adapté et donc relativement coûteux.

L'objet de la présente invention est de remédier aux inconvénients des procédés connus de prédiction de la masse d'air admise dans les cylindres, en proposant un procédé relativement simple de calcul des valeurs des paramètres utilisés (pression collecteur, débit, etc...) à l'instant de fermeture des soupapes d'admission correspondantes.

Le procédé de calcul de la masse d'air admise dans un cylindre de moteur à combustion interne selon l'invention concerne un moteur du type comportant un système électronique de contrôle pilotant le fonctionnement des injecteurs de carburant à partir des valeurs fournies par un capteur vilebrequin et par un capteur de pression disposé dans le collecteur d'admission amenant l'air aux différents cylindres, la masse d'air admise étant déduite de la pression collecteur EPcoll à l'instant de fermeture de la soupape d'admission du cylindre (à comparer avec US-A-5 003 950).

Selon l'invention, le procédé de calcul de la masse d'air est caractérisé en ce que la valeur de la pression EPcoll est calculée à chaque point mort haut du cylindre correspondant, comme étant la somme entre la pression Pcoll produite par ledit capteur de pression et un incrément DPcoll. Cet incrément DPcol est calculé comme étant le produit de la dérivée dPcoll par rapport au temps de la pression collecteur entre deux points morts hauts et d'une période Del1 exprimée en point mort haut correspondant au délai séparant l'instant de la mesure Pcoll et l'instant de la fermeture de la soupape d'admission.

Selon une autre caractéristique du procédé de calcul de la masse d'air, ladite période Del1 est obtenue sous la forme d'une fonction prédéterminée du régime de rotation N du moteur.

Selon une autre caractéristique du procédé de calcul de la masse d'air, la dérivée dPcoll par rapport au temps de la pression collecteur entre deux points morts hauts est calculée comme étant le produit entre un facteur K et la dérivée dMcoll par rapport au temps de la masse d'air contenue dans le collecteur entre deux points morts hauts.

Selon une autre caractéristique du procédé de calcul de la masse d'air, la dérivée dMcoll par rapport au temps de la masse d'air contenue dans le collecteur entre deux points morts hauts est obtenue sous la forme d'une différence entre la masse d'air Mpap entrant dans le collecteur d'admission entre deux points morts hauts et la valeur filtrée FMpap de ladite masse d'air Mpap.

Selon une autre caractéristique du procédé de calcul de la masse d'air, la valeur filtrée FMpap de la masse d'air entrant dans le collecteur Mpap est obtenue par un filtrage passe-bas du premier ordre.

Selon une autre caractéristique du procédé de calcul de la masse d'air, la valeur de la masse d'air entrant dans le collecteur Mpap est obtenue comme le produit entre une période Del2, correspondant à la durée séparant deux points morts hauts, la section de passage S du collecteur et d'une fonction F' de la valeur filtrée FMpap calculée au point mort haut précédent.

On comprendra mieux les buts, aspects et avantages de la présente invention, d'après la description présentée ci-après d'un mode de réalisation de l'invention, donné à titre d'exemple non limitatif, en se référant au dessin annexé, dans lequel :

- la figure 1 est une vue schématique en coupe d'un moteur à combustion interne équipé pour la mise en oeuvre du procédé selon l'invention ;

- la figure 2 est un graphique montrant l'évolution de la pression collecteur avec le temps lors d'un régime transitoire ;

- la figure 3 est un organigramme précisant les différentes étapes du procédé selon l'invention.

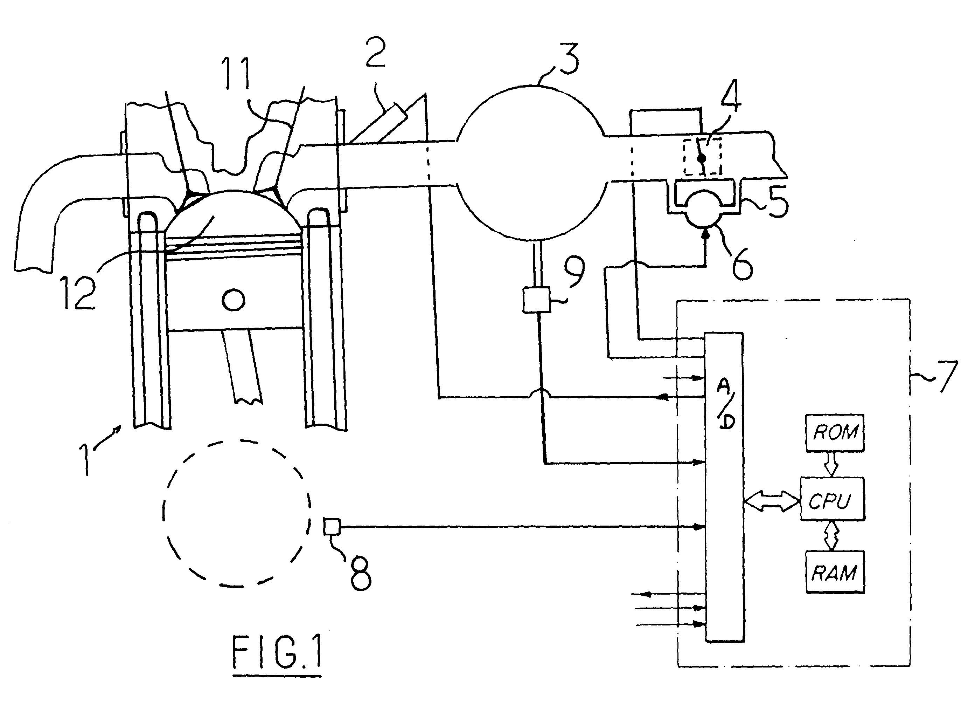

La figure 1 présente un moteur à combustion interne multicylindre pour un véhicule automobile ou routier équipé d'un système d'injection électronique du carburant du type indirect multipoint mettant en oeuvre le procédé de commande selon l'invention.

Dans l'exemple de réalisation décrit, l'estimation de la masse d'air admise dans chacun des cylindres, nécessaire au calcul du temps d'injection, est opérée à partir du procédé dit pression vitesse, c'est-à-dire à partir de la mesure de la pression de l'air dans le collecteur d'admission et de la mesure de la vitesse de rotation du moteur.

Seuls les éléments du moteur nécessaires à la compréhension de l'invention ont été figurés.

Le moteur à combustion interne référencé 1, est donc équipé d'un dispositif d'alimentation en carburant du type à injection indirect multipoint à commande électronique utilisant le procédé pression-temps pour le calcul du temps d'injection.

Chacun des cylindres du moteur est alimenté en air frais comburant depuis un collecteur d'admission 3 muni classiquement en amont d'un papillon des gaz 4 pilotant le débit d'air aspiré par le moteur. Le collecteur 3 est équipé d'une conduite 5 de by-pass du papillon 4, muni d'une vanne de régulation 6 pour les fonctionnements du moteur 1 au ralenti. L'admission de l'air dans le cylindre 12 est classiquement régie par la commande d'une soupape d'admission 11 à tige manoeuvrée par un système de distribution adapté non figuré. L'injection de carburant est opérée par un injecteur 2 à ouverture pilotée disposé sur le circuit d'admission en air du cylindre 12, en amont de la soupape d'admission 11.

L'ouverture de chaque électro-injecteur 2 est commandée par un système électronique de contrôle ou microcontrôleur 7, qui détermine l'instant d'injection et la quantité de carburant à injecter suivant les valeurs prises par différents paramètres agissant sur le fonctionnement du moteur 1.

Dans le système de contrôle moteur 7 sont mémorisés des paramètres fondamentaux pour le réglage optimal du moteur, lesdits paramètres étant obtenus préalablement au banc d'essai du moteur. Ce sont par exemple les paramètres concernant la phase d'injection de carburant dans chaque cylindre du moteur, la durée d'injection de carburant qui correspond à une quantité de carburant injectée, ou encore la phase d'allumage des bougies non représentées.

Le système électronique 7 comprend classiquement une unité centrale CPU, une mémoire vive RAM, une mémoire morte ROM, des convertisseurs analogiques-numériques A/D, et différentes interfaces d'entrées et de sorties. Il reçoit des signaux d'entrée relatifs au fonctionnement du moteur et des organes inter-agissant avec ce dernier, effectue des

EP 0 639 704 B1

opérations et génère des signaux de sortie à destination notamment des injecteurs 2. Les différentes stratégies de commande du moteur, formules et paramètres ou calibrations sont stockées dans la mémoire morte ROM.

Parmi les signaux d'entrées figurent ceux émis par un capteur vilebrequin 8 qui permettent le repérage du passage au point mort haut de chacun des cylindres, et la détermination de la vitesse de rotation du moteur. Ces signaux permettent, notamment, couplés à ceux émis par un capteur arbres à cames non figuré, de phaser les instants d'injection avec le fonctionnement du moteur.

Parmi les autres signaux d'entrée du système électronique 7, figurent également ceux émis par : un capteur de pression 9 disposé dans le collecteur d'admission en aval du papillon des gaz 6 et des capteurs de position associés respectivement au papillon des gaz 4 et à la vanne de régulation ralenti 6.

Le principe du procédé de calcul de la masse d'air frais admise dans les cylindres du moteur est le suivant.

Conformément au procédé pression vitesse, le temps d'injection de carburant pour un cylindre donné, est déterminé à partir d'une estimation de la masse d'air frais admise dans ce dernier. Cette estimation de la masse d'air frais est alors obtenue en utilisant les équations de la mécanique des fluides et de la thermodynamique des gaz :

$$Mmot = \mu * \frac{P * V}{R * T}$$

La masse d'air frais Mmot admise dans un cylindre est déduite de la pression P, de la température T, du volume V du cylindre, d'une constante R caractéristique de l'air et d'un facteur $\mu$ représentatif de la perméabilité du moteur, ce dernier facteur dépendant d'un certain nombre de paramètres et notamment du régime.

La température T peut être obtenue, soit par mesure au moyen d'un capteur disposé le plus près possible de la soupape d'admission, soit par calcul à partir d'une loi de montée en température du moteur prédéterminée et cartographiée dans le système de contrôle moteur, soit encore considérée en première approximation comme une constante.

La pression P est elle directement mesurée dans le collecteur d'admission, cette valeur sera donc désignée dans la suite par Pcoll. Il en résulte que seule la valeur observée à l'instant de fermeture de la soupape d'admission est réellement représentative de la pression de l'air admis dans le cylindre.

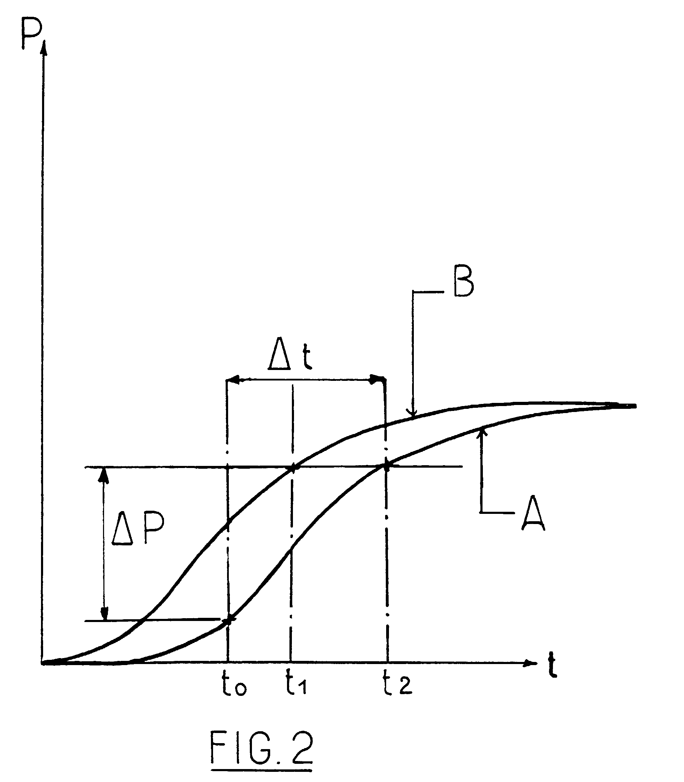

La figure 2 illustre par un graphique la difficulté de prise en compte de la valeur de la pression collecteur à l'instant de fermeture de la soupape d'admission, pendant un fonctionnement du moteur en transitoire.

La courbe A représente donc l'évolution possible de la pression collecteur dans le temps lors d'un fonctionnement du moteur en régime transitoire. Les instants t1, t0 et t2 correspondent respectivement au moment où le système électronique calcule le temps d'injection pour un cylindre donné, au moment où a été opérée la dernière mesure de la pression collecteur disponible à l'instant t1 pour le système électronique et au moment de la fermeture de la soupape d'admission correspondante.

Le système de contrôle moteur dispose donc, pour le calcul de la masse d'air admise dans un cylindre donné, d'une valeur de la pression collecteur qui est sensiblement différente de la pression à l'instant de la fermeture de la soupape d'admission.

Le procédé selon l'invention consiste donc à fournir à l'instant t1, une estimation suffisamment précise de l'écart algébrique (positif ou négatif) de la pression collecteur correspondant à l'évolution de cette dernière durant l'intervalle de temps t2 - t0. La courbe B présente la courbe de la pression collecteur estimée obtenue selon l'invention utilisée par le système électronique pour procéder au calcul du temps d'injection du carburant.

Dans la suite de la description on procédera, sauf indication contraire, au calcul de la variation de la pression collecteur non pas par rapport au temps mais par rapport au nombre de points morts hauts détectés.

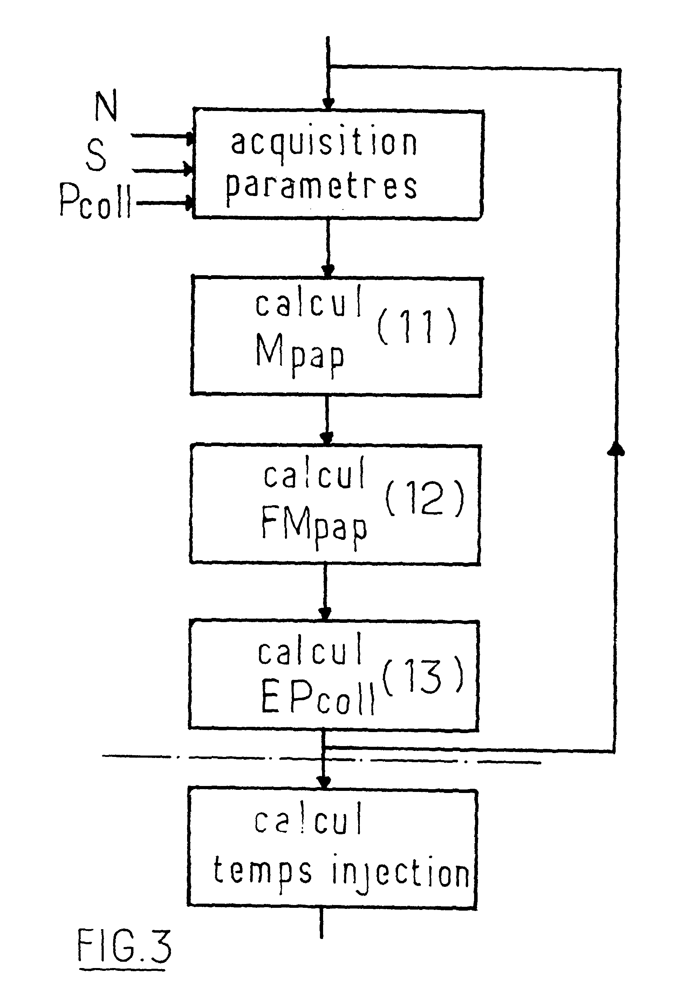

Conformément à la figure 3, le procédé de détermination de l'écart de pression permettant d'obtenir la valeur de la pression collecteur estimée, est le suivant.

Pour chacun des cylindres, le calcul du temps d'injection est opéré par le système électronique à chaque point mort haut correspondant. Pour cela, on calcule à chaque point mort haut d'indice i, la valeur estimée EPcoll(i) de la pression collecteur à la fermeture de la soupape d'admission, comme la somme entre la pression collecteur mesurée Pcoll(i) fournit par le capteur de pression et un incrément DPcoll(i) représentatif de l'évolution de la pression collecteur dans le temps :

(1)     EPcoll(i) = Pcoll(i) + DPcoll(i)

L'incrément DPcoll(i) est défini par la formule :

(2)     DPcoll(i) = Del1(i) * dPcoll(i)

4

dPcoll(i) représente la dérivée par rapport au temps de la pression collecteur entre deux points morts hauts, et Del1 la période séparant l'instant d'acquisition de la valeur Pcoll(i) et l'instant de fermeture de la soupape d'admission. La formule (2) consiste donc à approximer la courbe d'évolution de la pression entre les instants considérés, par une tangente à la courbe.

La période Del1(i), exprimée par conséquent en nombre de points morts hauts, comprend essentiellement le délai d'acquisition de la mesure de la pression (temps de réponse du capteur et du système électronique de contrôle moteur) et le délai séparant l'instant de calcul du temps d'injection de l'instant de fermeture de la soupape d'admission. Cette période est pour un capteur de pression donné et un système électronique de contrôle moteur donné, essentiellement fonction du régime de rotation N(i) du moteur, on peut donc en déduire :

$$(3) \qquad Del1(i) = f(N(i))$$

où f est une fonction définie expérimentalement et intégrée sous forme de cartographie dans le système électronique.

Cette dernière formule suppose en première approximation la stabilité du régime de rotation durant la période considérée, ce qui est le cas compte tenu de l'inertie du moteur et de la durée considérée (de l'ordre de quelques points morts hauts).

La dérivée dPcoll(i) de la pression collecteur est obtenue à partir de la dérivée, entre deux points morts hauts, dMcoll de la masse d'air frais Mcoll(i) présente dans le collecteur d'admission. En effet, par application des lois de la thermodynamique et de la dynamique des fluides, on montre de façon similaire à la relation unissant la pression collecteur et la masse d'air admise dans les cylindres :

$$Mmot = \mu * \frac{Pcoll * V}{R * T}$$

que la pression de l'air dans le collecteur est directement liée à la masse d'air contenue dans ce dernier :

$$Mcoll(i) = \frac{Pcoll(i) * Vcoll(i)}{R * Tcoll}$$

On peut donc en déduire la formule suivante :

$$(4) \qquad Pcoll(i) = K(i) * Mcoll(i)$$

K(i) représente un facteur variable en fonction de divers paramètres et notamment de la température, du volume du collecteur, d'une constante caractéristique de l'air.

La formule (4) permet donc d'établir le lien entre la dérivée dPcoll(i) de la pression collecteur et la dérivée dMcoll(i) de la masse d'air frais présente dans le collecteur d'admission :

$$(4') \qquad dPcoll(i) = K(i) * dMcoll(i)$$

La dérivée dMcoll(i) de la masse d'air Mcoll(i) entre deux points morts hauts est obtenue en utilisant l'équation de la conservation de la masse, comme la différence entre la masse d'air entrant dans le collecteur Mpap(i) et la masse d'air entrant dans le moteur Mmot(i) pendant l'intervalle séparant les deux points morts hauts considérés :

$$(5) \qquad dMcoll(i) = Mpap(i) - Mmot(i)$$

Or, comme aussi bien Mcoll que Mmot dépendent essentiellement de la pression collecteur (Pcoll(i) = K(i) * Mcoll(i) = K'(i) * Mmot(i)), on obtient une équation différentielle du premier ordre en Mmot et on en déduit alors que Mmot(i) peut encore s'exprimer comme la valeur filtrée FMpap(i) (filtre du premier ordre) de Mpap(i). Conformément à l'invention, le filtrage est opéré par rapport au nombre de points morts hauts. FMpap(i) est donc obtenue par la formule de récurrence suivante, mise à jour à chaque point mort haut :

$$(6) \qquad FMpap(i)=FMpap(i-1)+(K''(i)*(Mpap-FMpap(i-1))$$

La masse d'air filtrée est donc obtenue en incrémentant la valeur précédente d'une fraction seulement de l'écart K'' entre la masse d'air brute et cette valeur précédente. La masse d'air filtrée est initialisée à une valeur adéquate prédéterminée.

Le facteur K''(i) de filtrage est donc un facteur variable en fonction de divers paramètres et notamment de la température d'air, du volume collecteur, des caractéristiques du moteur ainsi que du régime de ce dernier. La valeur de K''(i) est obtenue par calcul à partir des caractéristiques précédentes.

On en déduit alors une nouvelle forme pour l'expression de dMcoll(i) :

$$(7) \qquad dMcoll(i) = Mpap(i) - FMpap(i)$$

La masse d'air Mpap(i) entrant dans le collecteur entre les deux points morts hauts considérés peut être obtenue à partir de la relation :

$$(8) \qquad Mpap(i) = Dpap(i) * Del2(i)$$

Dpap(i) définit le débit de l'air à l'entrée du collecteur et Del2(i) l'intervalle de temps correspondant à la période entre deux points morts hauts moteur.

Conformément aux équations de la mécanique des fluides, le débit d'air à l'entrée du collecteur Dpap est déduit de la valeur de la section de passage des gaz S à l'entrée du collecteur, de la pression amont (atmosphérique) Po et d'une fonction F de la température amont To et du rapport des pressions aval et amont (Pcoll/Po) :

$$(9) \qquad Dpap(i)=S(i)*Po(i)*F(To(i),Pcoll(i)/Po(i))$$

La section de passage S(i) est reconstituée à partir des informations fournies par le capteur de position équipant le boîtier papillon 4 et la valeur de commande de la vanne de régulation ralenti 6. L'expression de la fonction F est obtenue dans une table définie expérimentalement, la valeur To(i) peut soit être mesurée au moyen d'un capteur adapté, soit être obtenue à partir de lois prédéterminées et cartographiées dans le système de contrôle moteur, soit encore être considérée comme une constante.

Concernant la pression amont Po(i) et la perméabilité du moteur $\mu(N(i))$, on peut estimer en première approximation que ces valeurs n'évoluent pas ou peu compte tenu des échelles de temps considérées. On peut alors simplifier les calculs en procédant au changement de variables suivants:

$$Mpap' = \frac{Mpap}{\mu(N(i))*Po(i)}$$

$$Mmot' = \frac{Mmot}{\mu(N(i))*Po(i)}$$

$$FMpap' = \frac{FMpap}{\mu(N(i))*Po(i)}$$

Pour calculer le rapport Pcoll(i)/Po(i), on utilise alors préférentiellement non pas la valeur Pcoll(i) mesurée par le capteur de pression mais une valeur déduite de FMpap'. On a vu en effet que la masse d'air admise dans le moteur Mmot' qui est par définition égale à FMpap' est directement fonction de la pression collecteur Pcoll(i)

$$(Pcoll(i) = \frac{R * T}{V} * Po(i) * FMpap'(i)).$$

L'utilisation de FMpap'(i-1) (calculée pour lors du cycle précédent) en lieu et place de la valeur de Pcoll(i) mesurée par le capteur de pression permet d'améliorer la précision du calcul. La valeur Pcoll mesurée peut être en effet sujet à une légère imprécision du fait de phénomènes pulsatoires observés à certains points de fonctionnement du moteur dans le collecteur d'admission et notamment lors de fonctionnement à pleines charges lorsque la pression collecteur est voisine de la pression atmosphérique. Ces fluctuations de la pression collecteur peuvent être considérablement amplifiées dans le calcul du rapport Pcoll/Po et conduire à des calculs totalement erronés. L'utilisation du terme filtré FMpap' permet de supprimer ces risques de fluctuations et permet une remarquable convergence entre la pression calculée et la pression réelle, convergence particulièrement surprenante a priori du fait d'une telle formulation bouclée, Cf les formules 11 et 12 ci-après.

On en déduit donc :

$$(10) \qquad Dpap(i)=S(i)*Po(i)*F'(i,FMpap'(i-1))$$

(l'expression de la fonction F' étant définie expérimentalement)

On en déduit donc, compte tenu de ce qui précède, les formules permettant d'obtenir à chaque cycle de fonctionnement du moteur et pour un cylindre donné du moteur, la valeur estimée de la pression collecteur à l'instant de la fermeture de la soupape d'admission correspondante :

$$(11) \qquad Mpap'(i)= \frac{Del2(i)*S(i)}{\mu(N(i))} *F'(i,FMpap(i-1))$$

$$(12) \qquad FMpap'(i)=FMpap'(i-1)+( K''(i)*(Mpap'-$$

$$FMpap'(i-1)) )$$

$$(13) \qquad EPcoll(i)=Pcoll(i)+( f(N(i))*Po(i)*\mu(N(i))*$$

$$K(i)*(Mpap'(i)-FMpap'(i)) )$$

Ces équations permettent d'obtenir FMpap' et donc Mmot :

$$Mmot = FMpap' * Po(i) * \mu(N(i))$$

En conséquence, l'application par le système de contrôle moteur du procédé selon l'invention, permet une grande facilité de mise en oeuvre en fournissant un procédé de calcul particulièrement à la fois simple et fiable et permettant notamment un bon contrôle de la richesse en transitoire.

En particulier cette invention peut s'appliquer au cas où le capteur de débit moteur est un débimètre massique ainsi qu'également au cas où l'on souhaite évaluer le débit d'air moteur uniquement à partir des informations ouverture du papillon.

## Revendications

1. Procédé de calcul de la masse d'air admise dans un cylindre (12) de moteur à combustion interne (1) afin de déterminer la quantité de carburant devant être injectée dans ledit cylindre (12), ledit moteur (1) étant du type comportant un système électronique de contrôle (7) pilotant le fonctionnement des injecteurs de carburant (2) à partir des valeurs fournies par un capteur vilebrequin (8) et par un capteur de pression (9) disposé dans le collecteur d'admission (3) amenant l'air aux différents cylindres, la masse d'air admise étant déduite de la pression collecteur EPcoll à l'instant de fermeture de la soupape d'admission (11) du cylindre (12), caractérisé en ce que la valeur de la pression collecteur EPcoll est calculée à chaque point mort haut d'indice i dudit cylindre, comme étant la somme entre la pression Pcoll(i) produite par ledit capteur de pression (9) et un incrément DPcoll(i), ledit incrément DPcoll (i) étant calculé comme étant le produit de la dérivée dPcoll(i) par rapport au temps de la pression collecteur entre deux points morts hauts et d'une période Del1(i) exprimée en point mort haut correspondant au délai séparant l'instant de la mesure Pcoll(i) et l'instant de la fermeture de la soupape d'admission (11).

2. Procédé de calcul de la masse d'air selon la revendication 1, caractérisé en ce que ladite période Del1(i) est obtenue sous la forme d'une fonction prédéterminée du régime de rotation N(i) du moteur.

**3.** Procédé de calcul de la masse d'air selon l'une quelconque des revendications 1 à 2, caractérisé en ce que d'une part, ladite dérivée dPcoll(i) par rapport au temps de la pression collecteur entre deux points morts hauts est calculée comme étant le produit entre un facteur K(i) et la dérivée dMcoll(i) par rapport au temps de la masse d'air contenue dans le collecteur (3) entre deux point morts hauts.

**4.** Procédé de calcul de la masse d'air selon la revendication 3, caractérisé en ce que ladite dérivée dMcoll(i) par rapport au temps de la masse d'air contenue dans le collecteur (3) entre deux points morts hauts est obtenue sous la forme d'une différence entre la masse d'air Mpap(i) entrant dans le collecteur d'admission entre deux points morts hauts et la valeur filtrée FMpap(i) de ladite masse d'air Mpap(i).

**5.** Procédé de calcul de la masse d'air selon la revendication 4, caractérisé en ce que ladite valeur filtrée FMpap(i) de ladite masse d'air Mpap(i) est obtenue par un filtrage passe-bas du premier ordre.

**6.** Procédé de calcul de la masse d'air selon la revendication 5, caractérisé en ce que ladite valeur de ladite masse d'air Mpap(i) est obtenue comme le produit entre une période Del2(i), correspondant à la durée séparant deux points morts, la section de passage S(i) dudit collecteur (3) et d'une fonction F' de ladite valeur filtrée FMpap(i-1) calculée au point mort haut précédent.

**Patentansprüche**

**1.** Verfahren zur Berechnung der in einen Zylinder (12) eines Verbrennungsmotors (1) eingesaugten Luftmenge, um die Kraftstoffmenge zu bestimmen, bevor diese in den genannten Zylinder (12) eingespritzt wird, wobei der genannte Motor (1) von dem Typ ist, der ein elektronisches Kontrollsystem (7) umfasst, welches den Betrieb der Kraftstoffeinspritzdüsen (2) auf Grundlage von Werten steuert, die durch einen Kurbelwellen-Messfühler (8) und durch einen Druckfühler (9), welcher im Ansaugrohr (3) vorgesehen ist, das die Luft zu den verschiedenen Zylindern führt, bereitgestellt werden, wobei die eingesaugte Luftmenge aus dem Druck Epcoll im Ansaugrohr zum Zeitpunkt des Schliessens des Ansaugventils (11) des Zylinders (12) abgeleitet wird, dadurch gekennzeichnet, dass der Wert des Drucks im Ansaugrohr EPcoll an jedem oberen Totpunkt i des Zylinders als Summe des durch den Druckfühler (9) erzeugten Druckwertes Pcoll(i) und einem Inkrement DPcoll(i) berechnet wird, wobei das genannte Inkrement DPcoll(i) als Produkt der Ableitung dPcoll(i) über der Zeit des Drucks im Ansaugrohr zwischen zwei oberen Totpunkten und einer Zeitspanne Dell(i), am oberen Totpunkt, die der Verzögerung zwischen dem Zeitpunkt der Bestimmung von Pcoll(i) und dem Zeitpunkt des Schliessens des Ansaugventils (11) entspricht, berechnet wird.

**2.** Verfahren zur Berechnung der Luftmenge gemäss Anspruch 1, dadurch gekennzeichnet, dass die genannte Zeitspanne Dell(i) in Form einer vorbestimmten Funktion der Motordrehzahl N(i) erhalten wird.

**3.** Verfahren zur Berechnung der Luftmenge gemäss einem beliebigen der Ansprüche 1 bis 2, dadurch gekennzeichnet, dass einerseits die genannte Ableitung dPcoll(i) über der Zeit des Drucks im Ansaugrohr zwischen zwei oberen Totpunkten als Produkt eines Faktors K(i) und der Ableitung dMcoll(i) über der Zeit der im Ansaugrohr (3) zwischen zwei oberen Totpunkten enthaltenen Luftmenge berechnet wird.

**4.** Verfahren zur Berechnung der Luftmenge gemäss Anspruch 3, gekennzeichnet dadurch, dass die genannte Ableitung dMcoll(i) über der Zeit der zwischen zwei oberen Totpunkten im Ansaugrohr (3) enthaltenen Luftmenge in Form einer Differenz zwischen der Luftmenge Mpap(i), die zwischen zwei oberen Totpunkten in das Ansaugrohr eintritt, und dem gefilterten Wert FMpap(i) der genannten Luftmenge Mpap(i) erhalten wird.

**5.** Verfahren zur Berechnung der Luftmenge gemäss Anspruch 4, gekennzeichnet dadurch, dass der genannte gefilterte Wert FMpap(i) der genannten Luftmenge Mpap(i) durch eine Tiefpass-Filterung erster Ordnung erhalten wird.

**6.** Verfahren zur Berechnung der Luftmenge gemäss Anspruch 5, gekennzeichnet dadurch, dass der genannte Wert der genannten Luftmenge Mpap(i) als Produkt einer Zeitspanne Del2(i), die der Zeitdauer zwischen zwei Totpunkten entspricht, des Durchlassquerschnitts S(i) des genannten Saugrohrs (3) und einer Funktion F' des genannten gefilterten Werts FMpap(i-1), berechnet zum vorangegangenen oberen Totpunkt, erhalten wird.

# EP 0 639 704 B1

## Claims

1. Method of calculation of the mass of air admitted into a cylinder (12) of an internal combustion engine (1) in order to determine the quantity of fuel which has to be injected into said cylinder (12), said engine (1) being of the type comprising an electronic control system (7) regulating the operation of the fuel injectors (2) by means of values provided by a crankshaft sensor (8) and by a pressure sensor (9) arranged in the inlet manifold (3) supplying the air to the different cylinders, the mass of air admitted being calculated from the inlet pressure EPcoll at the time of closure of the inlet valve (11) of the cylinder (12), characterised in that the value of the manifold pressure EPcoll is calculated at each top dead centre indexed i of said cylinder, as being the sum of the pressure Pcoll(i) produced by said pressure sensor (9) and an increment DPcoll(i), said increment DPcoll(i) being calculated as being the product of the differential dPcoll(i) with respect to time of the manifold pressure between two top dead centres and a period Dell(i) expressed as a top dead centre corresponding to the length of time separating the time of the measurement Pcoll(i) and the time of closure of the inlet valve (11).

2. Method of calculation of the mass of air according to claim 1, characterised in that said period Dell(i) is obtained in the form of a predetermined function of the speed N(i) of the engine.

3. Method of calculation of the mass of air according to any one of claims 1 to 2, characterised in that on the one hand, said differential dPcoll(i) with respect to time of the manifold pressure between two top dead centres is calculated as being the product of a factor K(i) and the differential dMcoll(i) with respect to time of the mass of air contained in the manifold (3) between two top dead centres.

4. Method of calculation of the mass of air according to claim 3, characterised in that said differential dMcoll(i) with respect to time of the mass of air contained in the manifold (3) between two top dead centres is obtained in the form of a difference between the mass of air Mpap(i) entering the inlet manifold between two top dead centres and the filtered value FMpap(i) of said mass of air Mpap(i).

5. Method of calculation of the mass of air according to claim 4, characterised in that said filtered value FMpap(i) of said mass of air Mpap(i) is obtained by first order low pass filtering.

6. Method of calculation of the mass of air according to claim 5, characterised in that said value of said mass of air Mpap(i) is obtained as the product of a period Del2(i) corresponding to the length of time separating two top dead centres, the through section S(i) of said manifold (3) and of a function F' of said filtered value FMpap(i-1) calculated at the preceding top dead centre.

FIG.1

FIG. 2

FIG.3